(19) Europäisches Patentamt
European Patent Office
Office européen des brevets

(11) **EP 2 434 146 A1**

(12) **EUROPEAN PATENT APPLICATION**

(43) Date of publication:
**28.03.2012 Bulletin 2012/13**

(51) Int Cl.:
*F03D 7/02* *(2006.01)*    *F03D 7/04* *(2006.01)*
*F03D 11/00* *(2006.01)*

(21) Application number: **10179463.4**

(22) Date of filing: **24.09.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Siemens Aktiengesellschaft
80333 München (DE)**

(72) Inventor: **Laurberg, Hans
8000 Århus C (DK)**

(54) **Method of and device for determining a mass condition of a rotor of a wind turbine, and method of operating a wind turbine**

(57)    A method of determining a mass condition of a rotor (104) of a wind turbine (100) comprises initiating a change of a quantity value of a quantity acting on the rotor (104), measuring a change of another quantity value of another quantity representative of a momentum of the rotor (104) during a time interval, and determining the mass condition of the rotor (104) based on the determined change of the another quantity value in relation with the initiated change of the quantity value.

FIG 1

**Description**

Field of invention

The invention relates to the field of wind turbines, and in particular to a method of determining a mass condition of a rotor of a wind turbine, a device for determining a mass condition of a rotor of a wind turbine, and a method of operating a wind turbine.

Art Background

A wind turbine comprises a tower, a nacelle arranged on top of the tower, and a rotor. A hub of the rotor is designed as a front portion of the nacelle, and blades of the rotor are rotatably fixed to the hub. The rotor is rotatably movable around a rotational axis which is defined by a drive train partially extending within the nacelle. The drive train extends along a longitudinal extension of the nacelle and provides an operative connection between the rotor and a generator also located in the nacelle. The generator is configured for generating electrical energy based on a rotational movement of the rotor around the rotational axis. The generated electrical energy represents an output power of the wind turbine and is fed to a utility grid.

The drive train may comprise a rotor shaft, a gearbox, and a generator shaft. The rotor shaft connects the rotor to the gearbox, and the generator shaft connects the gearbox to the generator. The gearbox is configured for stepping up the rotational speed of the rotor for the generator to efficiently convert the mechanical energy into the electrical energy.

It is commonly known that a mass condition of the rotor may change with time.

For example, ice may build up on a blade of the rotor. Such an ice condition of the rotor may adversely affect the output power of the wind turbine, since the rotational movement of the rotor may slow down due to an increased blade mass and/or changed aerodynamic characteristics of the blade and thus the rotor. Thus, knowledge about the ice condition of the rotor may offer a possibility of improving an operational state of the wind turbine.

There are different techniques known to determine the ice condition of the rotor.

EP 1 748 185 A1 discloses a method of determining an ice condition of the rotor. An oscillation and/or a load of a rotor blade, the tower, and the drive train is measured and the measured data are compared with model data associated with an ice condition of the rotor.

EP 1 959 134 A2 discloses a method of detecting an asymmetric ice condition of the rotor. To this end, a lateral tower acceleration is measured. It is determined from the measured tower acceleration whether a rotor mass imbalance condition is present indicating the asymmetric ice condition.

EP 1 936 186 A2 discloses a method of detecting an asymmetric ice condition of the rotor. Measuring a lateral tower acceleration and a rotor speed of the rotor allows to determine whether a rotor mass imbalance condition is present indicating the asymmetric ice condition.

US 2005/0276696 A1 discloses a method for detecting ice on the rotor by measuring meteorological conditions, a rotor speed, a mechanical and/or electrical torque, and a blade root bending in a zero yaw condition of the nacelle. Further, deliberately yawing the nacelle allows for measuring gyroscopic loads indicating a mass imbalance between the blades.

DE 10 2006 032 387 A1 discloses a method of detecting ice on a rotor blade by measuring an intensity of an optical signal which is sent across the rotor blade by an optical sensor. Further, camera pictures of the rotor blades are compared with pictures of the rotor blade being ice-free. The optical sensor and the camera are activated by measuring weather conditions.

US 2008/0206052 A1 discloses a method of detecting ice on a rotor blade by measuring a structure-borne noise of the rotor blade, which is manually induced or induced by the operation of the wind turbine, by an accelerometer or a pitch angle sensor.

US 2008/0141768 A1 discloses a method of detecting ice on a rotor blade by measuring a wind velocity using two different anemometers. Comparison between the measured data of the two anemometers allows for concluding whether an ice condition of the rotor is present.

WO 2008/046215 A1 discloses a method of detecting ice on a rotor by measuring an average power output of the wind turbine, an average position of a rotor blade, and an average wind velocity around the wind turbine. An actual efficiency of the wind turbine is calculated based on the measured data and is compared to an efficiency of the wind turbine derived from reference data.

Further, the mass of the rotor may change owing to damages of the rotor.

There are different techniques known to determine a damage of a rotor blade.

DE 100 65 314 B4 discloses a method of monitoring a material state of the rotor blades by measuring an acoustic signal in a rotor blade which is either introduced by operating the wind turbine or by an actuator attached to the rotor blade.

WO 02/053910 A1 discloses a method of monitoring a material state of the rotor blades by measuring a structure-borne noise signal which is either introduced by operating the wind turbine or by an actuator attached to the rotor blade.

However, the above-mentioned techniques for determining a mass condition of the rotor may be expensive and complicated and may show poor results.

Summary of the Invention

It may be an object of the invention to provide an accurate, easy and reliable method of determining a mass condition of a rotor of a wind turbine.

In order to solve the object defined above, a method of determining a mass condition of the rotor of a wind turbine, a device for determining a mass condition of a rotor of a wind turbine, and a method of operating a wind turbine are provided.

According to an exemplary aspect of the invention, a method of determining a mass condition of a rotor of a wind turbine is provided, the method comprising initiating a change of a quantity value of a quantity acting on the rotor, measuring a change of another quantity value of another quantity representative of a momentum of the rotor during a time interval, and determining the mass condition of the rotor based on the measured change of the another quantity value in relation with the initiated change of the quantity value.

According to another exemplary aspect of the invention, a device for determining a mass condition of a rotor of a wind turbine is provided, the device comprising an initiating unit configured for initiating a change of a quantity value of a quantity acting on the rotor, a measuring unit configured for measuring a change of another quantity value of another quantity representative of a momentum of the rotor during a time interval, and a determining unit configured for determining the mass condition of the rotor based on the measured change of the another quantity value in relation with the initiated change of the quantity value.

According to another exemplary aspect of the invention, a method of operating a wind turbine is provided, the method comprising determining a mass condition of a rotor of the wind turbine according to a method as described above, and operating the wind turbine based on the determined mass condition of the rotor.

In the context of the application, the term "mass condition of the rotor" may particularly denote a state of the rotor associated with a mass of (particularly a blade or more blades of) the rotor. For example, the term may particularly denote a mass distribution of (particularly a blade or more blades of) the rotor with respect to a rotational axis of the rotor. For example, the term may particularly denote a mass of (particularly a blade or more blades of) the rotor.

In particular, the term "quantity" may particularly denote a (particularly measureable) parameter which may define a characteristic of an object associated with the quantity. For example, the quantity may be a torque associated with a rotational movement of a rotor.

The term "initiating a change of a quantity value" may particularly denote an actively or passively initiated change of the quantity value.

The term "quantity acting on the rotor" may particularly denote a quantity impacting on a characteristic of the rotor. For example, the quantity may influence a rotor rotational speed of the rotor.

The term "rotor momentum of the rotor" may particularly denote an angular momentum L of the rotor particularly being defined by $L = J \cdot \omega$ with J denoting a mass of inertia of the rotor and $\omega$ an angular velocity of the rotor. In particular, the rotor momentum may be equivalent to an energy associated with a rotational movement of the rotor.

The term "quantity representative of a rotor momentum" may particularly denote a quantity which may be directly or indirectly associated with the rotor momentum. In particular, the rotor momentum may comprise a functional relation with the quantity representing an input parameter of the functional relation.

In particular, the term "change of a value of a quantity" may particularly denote a change between a first value associated with an initial state of the quantity and a second value associated with a final state of the quantity.

In particular, the term determining the mass condition based on the measured change of the another quantity value "in relation with" the initiated change of the quantity value may particularly denote that the measured change of the another quantity value may be associated with the initiated change of the quantity value. For example, the association between the measured change of the another quantity value and the initiated change of the quantity value may be deduced by comparing both quantities to one another.

The method of and the device for determining a mass condition of a rotor may be based on measuring a difference value between a value associated with a state of the another quantity in which the change of the quantity may have been initiated and a value associated with a state of the another quantity in which the change of the quantity may have provided an impact on the another quantity. Thus, two values may be used for the determining of the mass condition of the rotor. In addition, the change of the another quantity value may be compared or set into relation with the initiated change of the quantity value, thereby enhancing an accuracy and reliability of the determining of the mass condition.

Further, the method may represent a very simple and intuitive technique to determine the mass condition of the rotor, since an association between a quantity impacting characteristics of the rotor and another quantity representative of a resulting impact of the change on the rotor may be used. In particular, using the another quantity representative of the rotor momentum may provide information about the rotational movement of the rotor and may be therefore indicative of the mass condition of the rotor in terms of the rotor comprising an additional mass, a mass imbalance and/or other aerodynamics due to a change of the rotor mass.

Further, since an impact on the another quantity may be measured upon initiating a change of the quantity value, the determining of the mass condition may be executed independently on external conditions such as a wind velocity. In contrast, measuring blade vibrations as known from prior art may require an operational state of the wind turbine in such wind conditions in which output power of the wind turbine may be generated. In particular, the method may be applicable to cases of almost no wind acting on the rotor.

Further, the method may require few sensors for measuring the change of the another quantity value, thereby reducing acquisition and maintenance costs of the wind turbine.

Next, further embodiments of the method of determining a mass condition of a rotor of a wind turbine will be explained. However, these embodiments also apply to the respective device and the respective method of operating the wind turbine. In particular, the change of the quantity value may occur at a starting time of the time interval or during the time interval. In particular, the change of the another quantity value may be measured during (particularly a time period of) the time interval. In particular, a time dependency of the another quantity value may show a constant slope during (particularly the time period of) the time interval. In particular, the change of the another quantity value may be partially or completely performed during the time interval.

The determining of the mass condition may comprise measuring the initiated change of the quantity value, wherein the determining of the mass condition may be further based on the measured initiated change of the quantity value. Thus, the change of the quantity value may be used as a further input value for the determining the mass condition of the rotor, whereby an accuracy of the determining of the mass condition may be enhanced.

In particular, a part of the initiated change of the quantity value (for example, a part of a signal difference) may be measured, and the measured part of the initiated change of the quantity value may be associated with a respective part of the measured another quantity value for the determining of the mass condition.

In particular, the change of the quantity value may be initiated by initiating a change of a further quantity value of a further quantity particularly acting on the rotor. In particular, the quantity and the further quantity may be directly associated with one another. For example, a generator power may be changed resulting in a change of a generator torque. Accordingly, a change of the generator power and a change of the generator torque may be initiated.

In particular, since the quantity may impact the another quantity, the another quantity may be associated with a functional relation with the quantity representing an input parameter of the functional relation.

The quantity may comprise one of a generator power of a generator of the wind turbine, a generator torque of the generator, a wind speed of a wind acting on the rotor, a pitch position of a blade of a rotor, and an actuator position of an actuator acting on a drive train of the wind turbine. In particular, the generator may be configured for generating electrical energy based on a rotational movement of the rotor. In particular, the term "generator power" may particularly denote an output power indicative of an electrical energy generated by the generator. The term "generator torque" may particularly denote a rotational force acting on a rotor of the generator. In particular, a torque of an object may be defined by $M = J*\alpha$ with a denoting $\alpha$ angular acceleration of the object. The term "pitch position of a blade" may particularly denote an angle of attack of the blade measured relative to a direction which may be perpendicular to a rotational axis of the rotor with the rotational axis of the rotor being defined along an extension of a hub or a nacelle of the wind turbine. In particular, the actuator may be adapted as a break acting on a drive train of the wind turbine connecting the rotor and the generator with one another. Thus, the quantity acting on the rotor may correspond to such a quantity which may exert a force on the rotor particularly transmitted by constructive components of the wind turbine. In particular, the above mentioned quantities may be easily changeable, thereby facilitating the method.

In particular, a change of a wind speed value of the wind speed may be passively executed owing to changes in weather conditions.

In particular, the quantity may affect a mechanical energy of a rotor plane of the rotor generated by a rotational movement of the rotor. For example, an increased generator torque, an increased generator power, and an activation of the actuator may result in a loss of energy in the rotor plane, since more electrical energy may be taken out of the wind turbine. In particular, a slower wind speed and a pitch position of a blade being suboptimal for an actual wind speed may result in a reduced energy of the rotor plane, since less energy may be captured by the rotor.

The another quantity may comprise one of a generator rotational speed of the generator, a rotor rotational speed of the rotor, a nacelle movement of a nacelle of the wind turbine, and a tower momentum of a tower of the wind turbine. In particular, the term "rotational speed" may particularly denote an angular velocity. In particular, the generator rotational speed may be proportional to the rotor rotational speed with a proportionality factor being equal to a real number particularly accounting for a gearbox efficiency of a gearbox arranged between the rotor shaft and the generator shaft. In particular, the term "nacelle movement of the nacelle" may particularly denote a displacement of the nacelle, a velocity of the nacelle or an acceleration of the nacelle in one or more directions. In particular, a change of the generator rotational speed and/or the rotor rotational speed may result in or may affect a nacelle movement or a tower momentum. Thus, based on the definition of the rotor momentum, the generator rotational speed and the rotor rotational speed may particularly represent natural quantities representative of the rotor momentum.

In particular, the selection of the quantity and the another quantity may depend on the structural design of the wind turbine.

The determining of the mass condition may comprise determining a value representative of a mass moment of inertia of (particularly a blade or more blades of) the rotor based on the change of the another quantity value in relation with the initiated change of the quantity value, particularly based on the measured change of the another quantity value and the measured initiated change of the quantity value. In particular, the term "mass moment of inertia of the rotor" may particularly denote a measure of a resistance of the rotor to changes of the rotational movement of the rotor. In particular, the mass moment of inertia of an object may be defined as $J = mr^2$ with m denoting a mass of the object and r the distance of the mass from a rotational axis of the object. In particular, the mass moment of inertia of the rotor may represent a suitable quantity for determining a mass of the rotor, since the mass moment of inertia may be regarded as a measure for the mass of a rotating object. In particular, the mass moment of inertia may represent a suitable quantity for determining a mass condition, particularly a mass change, of the rotor, for example, resulting from icing of the rotor and/or damages of the rotor. In particular, analytical or numerical mathematical procedures may be employed for determining the mass moment of inertia of the rotor based on the measured change of the another quantity value in relation with the initiated change of the quantity value. In particular, the functional relation of the another quantity from the quantity may be used for the determining of the mass moment of inertia. For example, when initiating a change of a generator power value and thus the generator torque value, and measuring the change of the generator torque value and a resulting change of the generator rotational speed value, a value of the combined mass moment of inertia of the generator and the rotor may be determined as a ratio between the change of the generator torque value and a change of a generator rotational acceleration value derived from the change of the generator rotational speed value.

In particular, a value representative of a mass moment of inertia of a blade or more blades of the rotor may be determined based on the determined value representative of the mass moment of inertia of the rotor. In particular, the value representative of the mass moment of inertia of the blade or the more blades of the rotor may be determined particularly if a mass moment of inertia of a remaining part of the rotor (for example, of a hub and/or another blade(s) of the rotor) may be known.

The determining of the mass condition may comprise determining a value representative of a mass of (particularly a blade or more blades of) the rotor based on the change of the another quantity value in relation with the initiated change of the quantity value, particularly based on the measured change of the another quantity value and the measured initiated change of the quantity value. In particular, the mass moment of inertia of an object may equal to a mass of the object times a distance of the mass from a rotational axis of the object. In particular, the determining of the value representative of the mass of (particularly the blade or the more blades of) the rotor may be based on the determined value representative of the mass moment of inertia of (particularly the blade or the more blades of) the rotor. In particular, the value representative of the mass of the rotor may be determined particularly if a constructive design of the rotor, particularly dimensions of the rotor, may be known. In particular, the value representative of the mass of the blade or the more blades of the rotor may be determined particularly if a constructive design, particularly dimensions, of the blade or the more blades whose value may be determined may be known. In particular, a value representative of a mass or a mass moment of inertia of a remaining part of the rotor may be known for the determining of the value representative of the mass of the blade or the more blades.

In particular, the method may comprise anew initiating a change of the quantity value, anew measuring the change of the another quantity value during a time interval, and anew determining the mass condition based on the measured change of the another quantity value in relation with the initiated change of the quantity value.

The determining of the ice condition may comprise determining a difference value of a difference between the determined value representative of the mass moment of inertia of the rotor and a value representative of a mass moment of inertia of the rotor associated with a reference state, wherein the determining of the mass condition may be based on the determined difference value. In particular, the determined value representative of the mass moment of inertia of the rotor and the value representative of the mass moment of inertia of the rotor associated with the reference state may be of the same kind. For example, the determined value of the mass moment of inertia of the generator and the rotor and a value of the mass moment of inertia of the generator and the rotor associated with the reference state may be compared with one another. Thus, the difference value may represent an accurate measure for the mass condition of the rotor. In particular, in a case in which an ice growth on a blade of the rotor may increase with time, the mass and thus the mass moment of inertia of the rotor may increase with time and the determined difference value may also increase with time.

The determining of the difference value may comprise subtracting a real number from the determined difference value. In particular, the real number may account for initiating and/or measuring inaccuracies of the change of the quantity value and/or the change of the another quantity value as well as for calculation inaccuracies during the determining of the value representative of the mass moment of inertia of the rotor based on the measured another quantity value in relation with the initiated (and measured) quantity value. Thus, the accuracy of the determining of the mass condition may be enhanced, since small measurement and calculation deviations may not be taken into account when determining the mass condition of the rotor.

The determining of the mass condition may comprise integrating the difference value, wherein the determining of the mass condition may be based on the integrated difference value. Thus, the mass condition may be determined over a time period in terms of integrating a plurality of difference values over the time. Consequently, the reliability of the determining of the mass condition may be enhanced. In particular, in a case in which a mass of the rotor may not change, for example, owing to no ice being built up on the rotor, the plurality of difference values and thus the integrated difference value may be equal to almost zero. In a case in which a mass of the rotor may change with time, for example, owing to ice being built up on a blade of the rotor, the difference values may increase with time and thus the integrated difference value may represent a value noticeable greater than zero. In a case of a reduction of the mass of the rotor owing to a progressive damage of the rotor, the difference value may decrease with time and thus the integrated difference value may increase with time. Thus, an easy and reliable measure for determining the mass condition may be provided, since the integration may make the mass condition "visible".

The integrating of the difference value may comprise selecting a maximum value of zero and an another difference value between the determined difference value at a time and an integrated difference value at a previous time. Thus, offering the possibility of selecting zero as the integrated difference value may allow for compensating the difference value being a number below zero particularly owing to the subtraction of the real number. Further, by taking into account previous values of the determined difference value at earlier times the integration may be more robust against errors.

The determining of the mass condition may comprise comparing the integrated difference value with a threshold value of a threshold indicative of the mass condition. In particular, the threshold value may be selected based on the time interval of the measuring of the change of the quantity value and/or the change of the another quantity value and/or on the kind of the determined value representative of the mass moment of inertia of the rotor and/or the integration time. In particular, in a case in which the integrated difference value may exceed the threshold value, the mass condition of the rotor may be determined. Thus, a very easy condition for determining the mass condition of the rotor may be provided, thereby facilitating the method.

The mass condition of the rotor may comprise an ice condition of the rotor. In particular, the term "ice condition of the rotor" may particularly denote a state of the rotor in which one blade or more blades of the rotor may be at last partially covered with ice. In particular, the ice may be symmetrically distributed across the blades of the rotor or may be asymmetrically distributed across one blade. Thus, applying the method for ice detection purposes may allow for an easy technique to determine whether ice may have built up on the rotor.

In particular, the reference state may be an ice-free state of the rotor, i.e. a state in which no ice may be built up on the rotor.

The mass condition of the rotor may be associated with a rotor class of the rotor. Thus, the method may also be applied for classifying the rotor, particularly one or more blades of the rotor. In particular, the rotor class may be associated with a length, a shape, and a mass of a blade of the rotor.

In particular, the reference state may be associated with a rotor class of the rotor. In particular, the determining of the difference value of the difference may be executed for different reference states, and the comparison of the respective integrated difference values may be executed for the different reference states.

Alternatively or in addition, the determined difference value associated with a blade class may be compared to a threshold value for the determining of the rotor class.

Next, further embodiments of the method of operating the wind turbine will be explained. However, these embodiments also apply to the respective method of and the respective device for determining an ice condition of a rotor of a wind turbine.

The operating may comprise at least one of removing the ice from the rotor of the wind turbine, associating an output power of the wind turbine with the determined mass condition, determining a future output power of the wind turbine based on the determined mass condition, and adapting an operational state of the wind turbine based on the determined mass condition. In particular, the term "output power of the wind turbine" may particularly denote a quantity defining an efficiency of the wind turbine. For example, the output power may represent the net power of the wind turbine based on a generated power of the generator. In particular, by removing the ice from the rotor, the operating of the wind turbine may be significantly increased. In particular, associating the output power of the wind turbine with the determined mass condition may be used for explaining (particularly a change of) the actual output power of the wind turbine, particularly a decrease of the output power of the wind turbine. In particular, determining a future output power of the wind turbine based on the determined mass condition may allow for forecasting the output power of the wind turbine based on knowledge of the mass condition of the rotor. In particular, an operational state of the wind turbine (for example, a rotor rotational speed, a pitch angle of a blade, an output power of the wind turbine) may be adapted, in order to improve the operation of the wind turbine in response to the actual conditions of the rotor. In particular, when classifying the rotor of the wind turbine, the adapting of the operational state of the wind turbine may comprise setting a rotor class in a control device of the wind turbine, thereby minimizing the amount of necessary control operations for a future control of the wind turbine.

In particular, the adapting of the control of the wind turbine may be identical or comprise adapting an operational state of the wind turbine. In particular, the adapting of the operational state of the wind turbine may comprise balancing (particularly at least one component of) a drive train of the wind turbine such that oscillations of (particularly the at least one component of) the drive train may be damped. In particular, such oscillations may arise owing to a mass imbalance of the rotor particularly generated by a damage of the rotor or icing of the rotor. In particular, a component of the drive train may be a rotor shaft, a gearbox, and a generator shaft, wherein the rotor shaft may connect (particularly the hub of) the rotor to the gearbox and the generator shaft may connect the gearbox to (particularly a rotor of) the generator. In particular, the adapting of the operational state of the wind turbine may comprise balancing a portion of the rotor shaft which may be housed within the nacelle.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawing

Fig. 1 illustrates a partial cross-section of a wind turbine.

Fig. 2 illustrates a front view of the wind turbine in Fig. 1.

Fig. 3 illustrates a time dependency of a generator torque of a generator of the wind turbine in Fig. 1 in accordance with a method of determining an ice condition of a rotor of a wind turbine according to an exemplary embodiment of the invention.

Fig. 4 illustrates a generator rotational speed of the generator in Fig. 1 in accordance with a method of determining an ice condition of a rotor of a wind turbine according to the exemplary embodiment of the invention.

Fig. 5 illustrates a device for determining an ice condition of the wind turbine in Fig. 1 according to an exemplary embodiment of the invention.

Detailed Description

The illustration in the drawing is schematic. It is noted that in different figures, similar or identical elements are provided with the same reference signs or with reference signs, which are different from the corresponding reference signs only within the first digit.

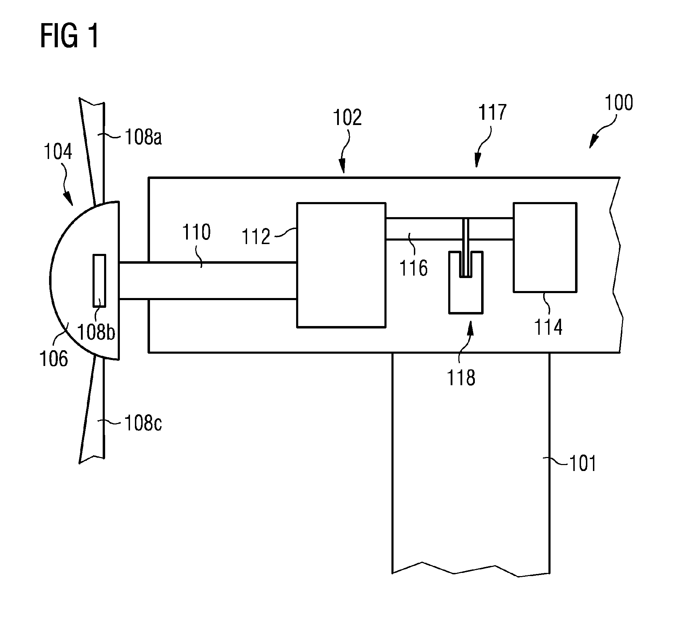

Referring to Fig. 1, a partial perspective view a wind turbine 100 is illustrated. The wind turbine 100 comprises a tower 101, a nacelle 102, and a rotor 104.

The rotor 104 is rotatably movable with respect to the nacelle 102 and comprises a hub 106 and blades 108a-c which are rotatably fixed at the hub 106. The rotor 104 is attached to a rotor shaft 110 which extends along a longitudinal extension of the nacelle 102. The rotor shaft 110 defines a rotational axis around which the rotor 104 is rotatable.

The rotor shaft 110 is connected to a gearbox 112 which is connected to a generator 114 via a generator shaft 116. The rotor shaft 110, the gearbox 112, and the generator shaft 116 represent a drive train 117 of the wind turbine 100. The gearbox 112 is configured for transmitting and thus stepping up a rotational movement of the rotor shaft 110 into a rotational movement of the generator shaft 116, in order to drive the generator 114.

An actuator 118 in the form of a break is positioned around the generator shaft 116 such that actuating the break causes a rotation of the generator shaft 116 to slow down or to stop.

In operation of the wind turbine 100 wind acting on the rotor 104 causes the blades 108a-c to rotate around the rotational axis of the rotor 104 such that the rotor shaft 110 being rotatably fixed to the rotor 104 rotates around its length extension. Thus, mechanical energy is generated.

The rotation of the rotor shaft 110 is transmitted into a rotation of the generator shaft 116 by means of the gearbox 112. The generator 114 generates electrical energy based on the rotational movement of the generator shaft 116 in that the generator 114 converts the mechanical energy of the rotor 104 into electrical energy. The generated electrical energy is supplied to an utility grid as an output power of the wind turbine 100.

Depending on weather conditions during the operation of the wind turbine, ice may be built on at least one of the blades 108a-c resulting in a mass imbalance and/or modified aerodynamics of the blades 108a-c. Here, the aerodynamics of the rotor 104 are defined by lift and drag coefficients of the blades 108a-b.

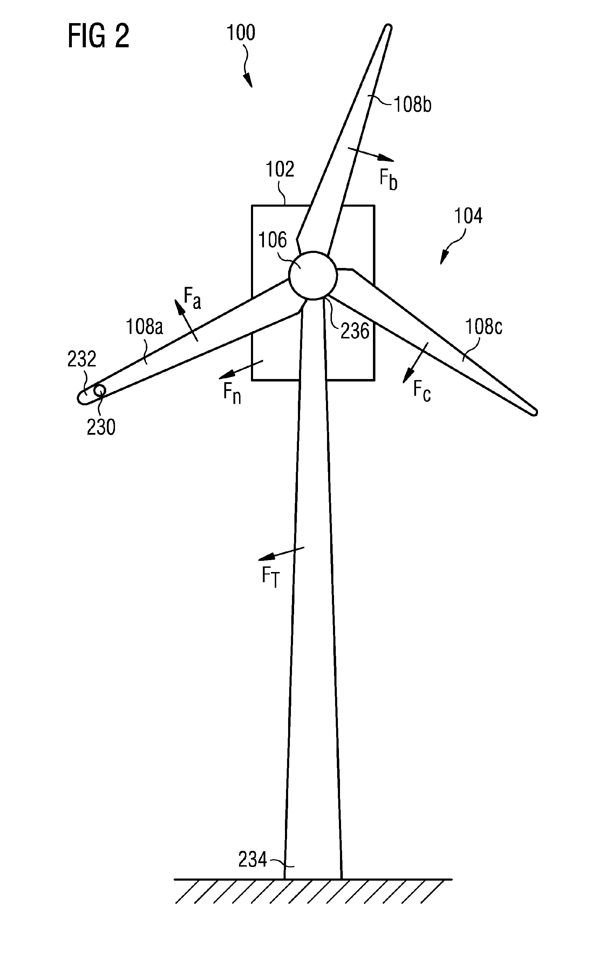

Referring to Fig. 2, a front view of the wind turbine 100 in Fig. 1 is illustrated. The rotor 104 comprises an ice condition in that ice 230 is built up on a tip 232 of the blade 108a causing a mass imbalance and a modified aerodynamics of the rotor 104. Accordingly, forces $F_a$, $F_b$, $F_e$ acting on the blades 108a-c may change depending on the amount of the ice 230. Further, loads on the nacelle 102 indicated by a force $F_n$ may also change. Further, loads on the tower 101 are generated in terms of loads on a foundation 234 of the tower 101 and on a root 236 of the rotor 104. Thus, a force $F_T$ representative for the loads on the tower 101 may change. Consequently, an output power and thus the efficiency of the wind turbine 100 decrease.

For example, when the ice 230 is built up on the blade 108a a change of a bending moment of the blade 108a is caused. Assuming the blade 108a comprising a bending moment of 1500 kNm and a mass of the ice 230 equaling to 10 kg results in a change of the bending moment equaling to 10 kg * 9.81 N/kg * 45 m = 4.41 kNm or a relative change of 0.3% of the bending moment. Here, 45 m is a blade length of the blade 108a.

Thus, determining the ice condition of the rotor 104 allows of improving the operation of the wind turbine 100.

In the following, a method of determining the ice condition of the rotor 104 of the wind turbine 100 according to an exemplary embodiment of the invention will be explained. It is assumed that a wind velocity of the wind is constant during executing the method.

A change of a generator power value of a generator power of the generator 114 is initiated at a particular time point, and a change of a generator torque value of a generator torque and a change of a generator rotational speed of the generator 114 are measured within a predefined time interval starting at the time point of the initiating. Here, the generator rotational speed of the generator 114 corresponds to an angular velocity of the rotor of the generator 114.

A change of the generator output power value causes a change of the generator torque value. For example, an increase in the generator power value causes the wind turbine 100 to slowdown such that a respective generator torque value increases and a respective generator rotational speed value decreases. Further, a decrease in the generator power value causes the wind turbine 100 to speed up such that the respective generator torque value decreases and the respective generator rotational speed value increases.

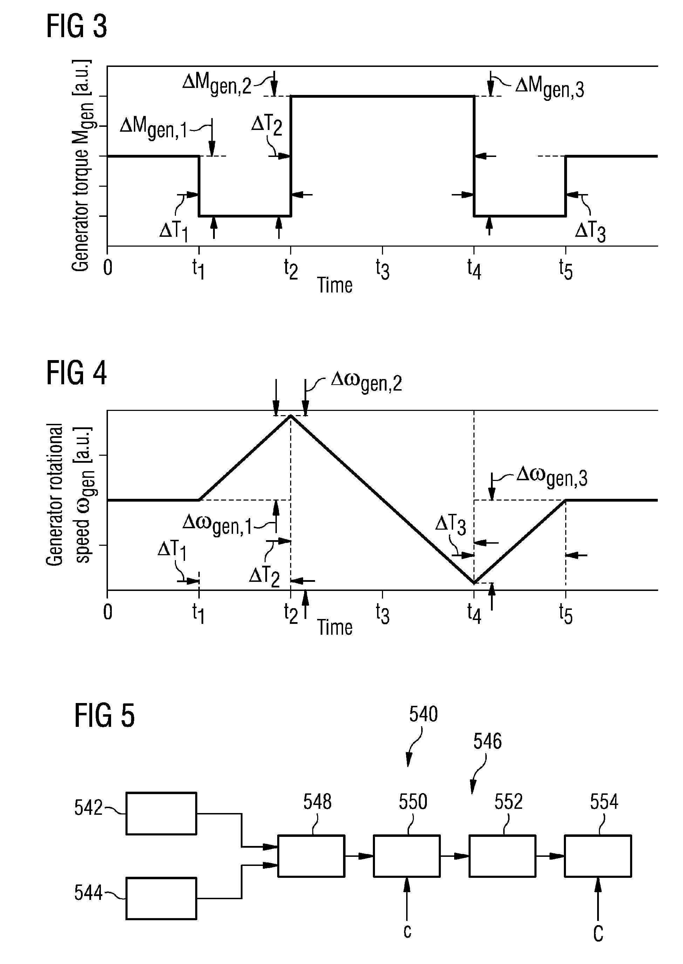

Referring to Figs. 3 and 4, measured time dependencies of the generator torque M and the generator rotational speed $\omega_{gen}$ are illustrated in arbitrary units (a. u.). In a first time interval $[0;t_1]$ the wind turbine 100 operates in a stable condition, i.e. the amount of rotational energy generated by the rotor 104 approximately equals to the amount of electrical energy generated and outputted by the generator 114. The generator output power comprises a constant value, for example 2.2 MegaWatt (MW), and, accordingly, the generator torque M and the generator speed $\omega_{gen}$ comprises constant values.

At the time point $t_1$ the change of the output power of the wind turbine 100 is initiated. For example, the output power is decreased by 0.1 MW from 2.2 MW to 2.1 MW. Accordingly, the generator power and thus the generator torque $M_{gen}$ show a step-like decrease at the time point $t_1$, and the generator rotational speed $\omega_{gen}$ linearly increases within the time interval $[t_1;t_2]$. An increase of the generator output power at a time point $t_2$ results in a step-like increase of the generator torque $M_{gen}$ and a constant decrease of the generator rotational speed $\omega_{gen}$ within a time interval $[t_2; t_4]$. Further decreasing the generator output power at a time point $t_4$ results in a step-like decrease of the generator torque $M_{gen}$ at the time point $t_4$ and a constant increase of the generator rotational speed $\omega_{gen}$ within the time interval $[t_4; t_5]$.

A mass moment of inertia of the rotor 104 is determined based on the changes of the generator torque values and the changes of the generator rotational speed values within the time intervals, as will be explained in the following. The step-like changes of the generator torque $M_{gen}$ results in values $\Delta M_{gen,i}$ of the order of the step height ($i \in \{1,2,3\}$). The change of the generator rotational speed values results in values $\Delta \omega_{gen,i}$ within the time intervals $\Delta T_i$ with $i \in \{1, 2, 3\}$, wherein the values $\Delta \omega_{gen,i}$ are defined as a difference between a value at a starting time of the time interval and a value at an ending time of the time interval. A generator rotational acceleration $\Delta \alpha_i$ is determined as a ratio of $\Delta \omega_{gen,i}$ and $\Delta T_i$, namely $\Delta \alpha_i = \Delta \omega_{gen,i} / \Delta T_i$.

With basis in theory that the momentum L equals to $J*\omega$ and the torque M is a derivate of the momentum L and equals to $J*\alpha$ the mass moment of inertia $J_{gen+rot}$ of the generator 114 and the rotor 104 is calculated using

$$J_{gen+rot,i} = \Delta M_{gen,i} / \Delta \alpha_i \ (i \in \{1,2,3\}).$$

Since the measured time dependency of the generator rotational speed values are superimposed with noise and the resulting change of the generator rotational speed values are small numbers, the measured time dependencies of the generator torque and the generator rotational speed are overlaid with one another each of which having a common time axis. Thus, the intervals $[t_i;t_{i+1}]$ are clearly indentified for the calculation.

Subtracting from the determined values $J_{gen+rot,i}$ the time invariant mass moment of inertia $J_{gen}$ of the generator 114 (which may also account for effects of the gearbox 112) results in the mass moment of inertia $J_{rot,i}$ of the rotor 104.

In order to determine whether ice is built up on the rotor 104, the determined mass moments of inertia $J_{rot,i}$ of the rotor 104 are compared to a mass moment of inertia $J_{rot,ice-free}$ of the rotor 104 being ice-free using

$$\Delta J_i = J_{rot,i} - J_{rot,ice-free} - c.$$

Here, c denotes a real number with c < 1 accounting for deviations as to the measuring and determining of $J_{rot,i}$. The mass moment of inertia $J_{rot,ice-free}$ of the rotor 104 being ice-free is determined by applying the technique as described above in weather conditions during which it is ensured that no ice 230 can be built up on the rotor 104. Alternatively, an ideally calculated mass moment of inertia $J_{rot,ice-free}$ of the rotor 104 based on the constructive design of the rotor 104 may be used for the comparison. To this end, the known equation $J = mr^2$ may be applied.

Integrating the determined values $\Delta J_i$ is executed by applying

$$Int\_\Delta J_i = max\ (0,\ \Delta J_i - Int\_\Delta J_{i-1}).$$

Thus, a certainty of determining the ice condition of the rotor 104 is enhanced, since the integrated number $Int\_\Delta J_i$ results in a number increasing with time for the ice condition whereas $\Delta J_i$ may be a small number.

The integrated difference value $Int\_\Delta J_i$ is compared to a threshold value C of a threshold using

$$Int\_\Delta J_i > C.$$

Here, the condition is applied that the integrated difference value $Int\_AJ_i$ exceeding the threshold value C indicates that the ice 230 has been built up on the rotor 104 and thus the ice condition of the rotor 104 is determined.

Alternatively to applying the above mentioned determination steps on the determined mass moment of inertia of the rotor 104, the total mass moment of inertia of the rotor 104 and the generator 114 may be used for the determining of the ice condition. Accordingly, the threshold value C may have to be selected in a suitable way.

Alternatively to initiating a change of the generator torque value and measuring the change of the generator torque value and the generator rotational speed value the following quantity value can be changed and the following quantities can be measured for the determining whether an ice condition is present:

A change of the generator torque value may be initiated, and the change of the generator torque value and a resulting change of one of the tower moment value, a nacelle acceleration value of a nacelle acceleration, and a rotor rotational speed value may be measured.

Further, a change of the generator power value may be initiated, and the change of the generator power value and a resulting change of one of the tower moment value, the nacelle acceleration value, the rotor rotational speed value and the generator rotational speed value may be measured.

Further, a change of the wind speed value may be initiated by changing weather conditions, and the change of the wind speed value and a resulting change of one of the rotor rotational speed value and the generator rotational speed value may be measured.

Further, a change of a pitch position value of a pitch system of at least one blade 108a-c of the rotor 104 may be initiated, and the change of the pitch position value and a resulting change of one of the rotor rotational speed value and the generator rotational speed value may be measured.

Based on the above-mentioned quantities the mass moment of inertia of the rotor 104 may be calculated using suitable functional relations describing that the resulting change of the quantity value may be a function of the quantity value whose change was initiated. The determined mass moment of inertia may be then compared to the mass moment of inertia of the rotor 104 being ice-free.

In order to improve the reliability of the determined ice condition, a blade frequency of one or more of the blades 108a-c may be determined. The ice condition of the rotor 104 can be estimated from the determined blade frequency and the result may be compared to the method described above. Referring to Fig. 5, a device 540 for determining an ice condition of the rotor 104 of the wind turbine 100 according to an exemplary embodiment of the invention will be explained. The device 540 comprises an initiating unit configured for initiating a change of a generator torque value of a generator torque of the generator 114. In particular, the initiating unit may be part of a control unit configured for controlling an output power of the wind turbine. The device 540 comprises a measuring unit 542 configured for measuring a change of the generator torque value and a measuring unit 544 configured for measuring a resulting change of the generator rotational speed value. Further, the device 540 comprises a determining unit 546 configured for determining the ice condition of the rotor 104 based on the measured change of the generator rotational speed value and the measured change of the generator torque value. The determining unit 546 comprises a determining unit 548 configured for determining the mass moment of inertia of the rotor 104 based on the change of the generator torque value and the change of the generator rotational speed value. Both the changes of the generator torque value and the generator rotational speed value represent input values to the determining unit 548. A subtracting unit 550 is configured for subtracting a mass moment of inertia of the rotor 104 being ice-free and a tolerance value c from the determined value of the mass moment of inertia of the rotor 104. An integration unit 552 is configured for integrating the determined difference value outputted by the subtracting unit 550. In particular, the integrating unit 552 is configured for applying a maximum function to the output value of the subtracting unit 550 in terms of selecting a maximum value of either zero or an another difference value between the determined difference value at a first time point and an integrated difference value at a previous time point. Further, the determining unit 546 comprises a comparison unit 554 configured for comparing the integrated difference value with a threshold value C of a threshold indicative of the ice condition.

The operating of the wind turbine 100 may be adapted based on the determined ice condition of the wind turbine 100 by activating a de-icing device configured for removing the ice 230 from the blade 108a of the rotor 104. Further, the operating may make use of the determined ice condition for explaining the actual efficiency of the wind turbine 100 and/or for forecasting a future efficiency of the wind turbine 100 and thus the future output power generated by the wind turbine 100. Further, the operating may comprises adapting an operational state of the wind turbine 100 particularly by decreasing the rotor rotational speed of the rotor 104 to ensure that no damage of the rotor 105 may occur.

In the following, a method of determining the blade class of the rotor 104 of the wind turbine 100 according to another exemplary embodiment of the invention will be explained. As detailed above, a change of the generator power value and thus the generator torque value may be initiated, and the initiated change of the generator torque value and the resulting change of the generator rotational speed value are measured. Based on a determined mass moment of inertia of the rotor 104 the blade class is determined in that the determined mass moment of inertia is compared with known values of a mass moment of inertia associated with different blade classes.

In the following, a method of determining the mass of the blade 108a of the rotor 104 of the wind turbine 100 according to another exemplary embodiment of the invention will be explained. As detailed above, a change of the generator power value and thus the generator torque value may be initiated, and the initiated change of the generator torque value and the resulting change of the generator rotational speed value may be measured. Based on a determined mass moment of inertia of the rotor 104 the mass moment of inertia of the blade 108a may be determined assuming that the three blades 108a-c may comprise an equal mass moment of inertia. The mass of the blade 108a may be determined based on the determined mass moment of inertia of the blade 108a and known dimensions of the blade 108a.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method of determining a mass condition of a rotor (104) of a wind turbine (100), the method comprising

   - initiating a change of a quantity value ($\Delta M_{gen,i}$) of a quantity ($M_{gen}$) acting on the rotor (104),
   - measuring a change of another quantity value ($\Delta \omega_{gen,i}$) of another quantity ($\omega_{gen}$) representative of a momentum of the rotor (104) during a time interval ($\Delta T_i$), and
   - determining the mass condition of the rotor (104) based on the measured change of the another quantity value ($\Delta \omega_{gen,i}$) in relation with the initiated change of the quantity value ($\Delta M_{gen,i}$.

2. The method according to claim 1, wherein the determining of the mass condition comprises measuring the initiated change of the quantity value ($\Delta M_i$), wherein the determining of the mass condition is further based on the measured initiated change of the quantity value ($\Delta M_i$).

3. The method according to claim 1 or 2, wherein the quantity comprises one of a generator power of a generator (114) of the wind turbine (100), a generator torque ($M_{gen}$) of the generator (114), a wind speed of a wind acting on the rotor (104), a pitch position of a blade (108a-c) of the rotor (104), and an actuator position of an actuator (118) acting on a drive train (117) of the wind turbine (100).

4. The method according to anyone of claims 1 to 3, wherein the another quantity ($\omega_{gen}$) comprises one of a generator rotational speed ($\omega_{gen}$) of the generator (114), a rotor rotational speed of the rotor (104), a nacelle movement of a nacelle (102) of the wind turbine (100), and a tower momentum of a tower (101) of the wind turbine (100).

5. The method according to anyone of claims 1 to 5, wherein the determining of the mass condition comprises determining a value ($J_{rot,i}$) representative of a mass moment of inertia ($J_{rot,i}$) of the rotor (104) based on the change of the another quantity value ($\Delta\omega_{gen,i}$) in relation with the initiated change of the quantity value ($\Delta M_{gen,i}$).

6. The method according to claim 5, wherein the determining of the mass condition comprises determining a difference value ($\Delta J_i$) of a difference between the determined value ($J_{rot,i}$) representative of the mass moment of inertia ($J_{rot,i}$) of the rotor (104) and a value representative of a mass moment of inertia ($J_{rot,ice-free}$) of the rotor (104) associated with a reference state, wherein the determining of the mass condition is based on the determined difference value ($\Delta J_i$).

7. The method according to claim 6, wherein the determining of the difference value ($\Delta J_i$) comprises subtracting a real number (c) from the determined difference value ($\Delta J_i$).

8. The method according to claim 6 or 7, wherein the determining of the ice condition comprises integrating the difference value ($\Delta J_i$), wherein the determining of the ice condition is based on the integrated difference value ($Int\_\Delta J_i$).

9. The method according to claim 8, wherein the integrating of the difference value comprises selecting a maximum value of zero and an another difference value of a difference between the determined difference value ($\Delta J_i$) at a time (i) and an integrated difference value ($Int\_\Delta J_{i-1}$) at a previous time (i-1).

10. The method according to claim 8 or 9, wherein the determining of the mass condition comprises comparing the integrated difference value ($Int\_\Delta J_i$) with a threshold value (C) of a threshold indicative of the mass condition.

11. The method according to anyone of claims 1 to 10, wherein the mass condition of the rotor (104) comprises an ice condition of the rotor (104).

12. The method according to anyone of claims 1 to 10, wherein the mass condition is associated with a rotor class of the rotor (104).

13. A device for determining a mass condition of a rotor (104) of a wind turbine (100), the device comprising

  - an initiating unit configured for initiating a change ($\Delta M_{gen,i}$) of a quantity value of a quantity ($M_{gen}$) acting on the rotor (104),
  - a measuring unit (544) configured for measuring a change of another quantity value ($A\omega_{gen,i}$) of another quantity ($\Delta\omega_{gen}$) representative of a momentum of the rotor (104) during a time interval ($\Delta T_i$), and
  - a determining unit (546) configured for determining the mass condition of the rotor (104) based on the measured change of the another quantity value ($\Delta\omega_{gen,i}$) in relation with the initiated change of the quantity value ($\Delta M_{gen,i}$).

14. A method of operating a wind turbine (100), the method comprising

  - determining a mass condition of a rotor (104) of the wind turbine (100) according to a method of determining a mass condition of a rotor (104) of a wind turbine (100) according to anyone of claims 1 to 11, and
  - operating the wind turbine (100) based on the determined mass condition.

15. The method according to claim 14, wherein the operating comprises at least one of removing ice (230) from the rotor (104) of the wind turbine (100), associating an output power of the wind turbine (100) with the determined mass condition, determining a future output power of the wind turbine (100) based on the determined mass condition, and adapting a control of the wind turbine (100) based on the determined mass condition.

FIG 1

FIG 2

FIG 3

FIG 4

FIG 5

**EP 2 434 146 A1**

Europäisches
Patentamt

European
Patent Office

Office européen
des brevets

# EUROPEAN SEARCH REPORT

**Application Number**

EP 10 17 9463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2008 006322 U1 (ARADEX AG [DE]) 17 July 2008 (2008-07-17) | 1-15 | INV.<br>F03D7/02<br>F03D7/04<br>F03D11/00 |
| Y | * paragraph [0011] - paragraph [0023] *<br>* paragraph [0049] - paragraph [0061]; claims 1-5, 10-12, 15-17, 22; figures 1-9 * | 1-15 | |
| X | WO 2007/007333 A2 (TECHNION RES & DEV FOUNDATION [IL]; BUCHER IZHAK [IL]; SHOMER OFER [IL] 18 January 2007 (2007-01-18) | 1,13,14 | |
| Y | * paragraph [0003] - paragraph [0007] *<br>* paragraph [0039] - paragraph [0084]; claims 1, 5; figures 1-5 * | 2-12,15 | |
| X | US 2007/183885 A1 (ORMEL FRANK THEODOOR [NL] ET AL) 9 August 2007 (2007-08-09)<br>* paragraph [0003] *<br>* paragraph [0016] - paragraph [0027]; claim 1; figures 1-6 * | 1-15 | |
| Y,D | US 2005/276696 A1 (LEMIEUX DAVID L [US] LEMIEUX DAVID LAWRENCE [US])<br>15 December 2005 (2005-12-15)<br>* paragraph [0044] - paragraph [0046]; claims 1,3,4,7, 9-11, 14, 15, 28,31; figures 1-9 * | 1-15 | **TECHNICAL FIELDS SEARCHED (IPC)**<br><br>F03D |
| A,D | EP 1 936 186 A2 (GEN ELECTRIC [US])<br>25 June 2008 (2008-06-25)<br>* the whole document * | 1-15 | |

The present search report has been drawn up for all claims

| Place of search | Date of completion of the search | Examiner |
|---|---|---|
| Munich | 16 May 2011 | Balice, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

**ANNEX TO THE EUROPEAN SEARCH REPORT
ON EUROPEAN PATENT APPLICATION NO.**

EP 10 17 9463

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2011

| Patent document cited in search report | Publication date | Patent family member(s) | | Publication date |
|---|---|---|---|---|
| DE 202008006322 U1 | 17-07-2008 | NONE | | |
| WO 2007007333 A2 | 18-01-2007 | EP | 1904975 A2 | 02-04-2008 |
| | | US | 2009293613 A1 | 03-12-2009 |
| US 2007183885 A1 | 09-08-2007 | CN | 101235799 A | 06-08-2008 |
| | | EP | 1959130 A2 | 20-08-2008 |
| US 2005276696 A1 | 15-12-2005 | CN | 1707262 A | 14-12-2005 |
| | | DE | 102005016524 A1 | 29-12-2005 |
| EP 1936186 A2 | 25-06-2008 | CN | 101206161 A | 25-06-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1748185 A1
- EP 1959134 A2
- EP 1936186 A2
- US 20050276696 A1
- DE 102006032387 A1
- US 20080206052 A1
- US 20080141768 A1
- WO 2008046215 A1
- DE 10065314 B4
- WO 02053910 A1